# FASCICULE DE BREVET EUROPEEN

(11) **EP 3 414 059 B1**
(45) Date de publication et mention de la délivrance du brevet: **22.01.2020**
(21) Numéro de dépôt: 17704242.1
(22) Date de dépôt: 09.02.2017
(51) Int. Cl.: B25J 9/00

(54) **MÉCANISME À ARCHITECTURE PARALLÈLE SANS SINGULARITÉ**
MECHANISMUS MIT SINGULARITÄTSFREIER PARALLELARCHITEKTUR
MECHANISM WITH SINGULARITY-FREE PARALLEL ARCHITECTURE

(30) Priorité: 10.02.2016 FR 1651056
(43) Date de publication de la demande: 19.12.2018
(73) Titulaire: Centre National d' études Spatiales CNES, 75001 Paris (FR); Comat Concept Mecanique et Assistance Technique, 31130 Flourens (RE)
(72) Inventeur: RAYNAL, Nicolas, 31400 Toulouse (FR)
(74) Mandataire: Delorme, Nicolas
(86) Numéro de dépôt international: PCT/EP2017/052823
(87) Numéro de publication internationale: WO 2017/137478

(56) Documents cités:
- BERNABE L ET AL: "3POD: A high performance parallel antenna pointing mechanism", 20130925; 20130925 - 20130927 , 25 septembre 2013 (2013-09-25), pages 1-8, XP002763470, ISBN: 978-92-9092-282-7 Extrait de l'Internet: URL:http://esmats.eu/esmatspapers/pastpape rs/pdfs/2013/bernabe.pdf cité dans la demande
- YUICHI TSUMAKI ET AL: "Development of a Compact 6-DOF Haptic Interface", NIHON ROBOTTO GAKKAISHI - JOURNAL OF THE ROBOTICS SOCIETY OF JAPAN, vol. 23, no. 4, 1 janvier 2005 (2005-01-01), pages 474-481, XP055331922, JP ISSN: 0289-1824, DOI: 10.7210/jrsj.23.474

## Description

L'invention concerne un mécanisme, dit mécanisme à architecture parallèle, comprenant :
- un socle,
- un mobile,
- au moins trois chaînes cinématiques interposées entre le socle et le mobile, dont trois chaînes cinématiques comprenant chacune :
   ∘ un bras, dit bras de base, ayant une extrémité, dite extrémité de base, reliée au socle par au moins une liaison pivot selon un axe de pivot, dit axe de base, les différents axes de base des différentes chaînes cinématiques étant non concourants en un même point,
   ∘ un actionneur rotatif, dit actionneur de base, contrôlant une position angulaire, dite angle de base, du bras de base autour de l'axe de base par rapport au socle,
   ∘ un bras, dit avant-bras de mobile, ayant une extrémité, dite extrémité de mobile, reliée au mobile par au moins une liaison pivot selon un axe de pivot, dit axe de mobile, les différents axes de mobile des différentes chaînes cinématiques étant non concourants en un même point,
   ∘ un dispositif d'articulation, dit dispositif d'articulation de coude, reliant le bras de base et l'avant-bras de mobile et comprenant au moins :
      - une rotation selon un axe, dit axe de bras, non parallèle à l'axe de base,
      - une rotation selon un axe, dit axe de coude, non parallèle à l'axe de bras,
      - une rotation selon un axe, dit axe d'avant-bras, non parallèle à l'axe de coude,
      - l'axe de base, l'axe de bras et l'axe de coude étant non parallèles deux à deux,
- les différentes chaînes cinématiques et les différents actionneurs rotatifs permettant un contrôle de position et un déplacement du mobile par rapport au socle selon au moins deux degrés de liberté.

L'invention s'étend également à un véhicule doté d'au moins un mécanisme selon l'invention. Dans tout le texte, le terme « véhicule » désigne tout dispositif susceptible de se déplacer ou d'être déplacé, et couvre donc en particulier les engins et véhicules terrestres ; les engins et véhicules aquatiques (navires, sous-marins...) ; les engins, véhicules et systèmes spatiaux (satellites, sondes spatiales, stations spatiales, navettes spatiales, lanceurs, atterrisseurs, impacteurs, et leurs sous-ensembles...) ; les engins et véhicules aériens (aéronefs, missiles,...) etc.

Dans tout le texte, on désigne par « bras » toute structure rigide s'étendant entre deux (et deux seulement) liaisons qu'elle relie.

Les différentes chaînes cinématiques sont telles qu'elles déterminent un domaine, dit domaine de pointage, de valeurs possibles de l'angle de site et de l'angle d'azimut du mobile, à partir uniquement des valeurs des différents angles de base, c'est-à-dire définissent et imposent un domaine de positions pouvant être prises par le mobile par rapport au socle, chaque position étant définie par une valeur de l'angle de site et une valeur de l'angle d'azimut du mobile dépendant uniquement des valeurs pouvant être données aux différents angles de base.

Les lois cinématiques d'un tel mécanisme à architecture parallèle sont extrêmement complexes, de sorte que la commande d'un tel mécanisme à partir de la résolution en temps réel d'équations de pilotage nécessite une puissance de calcul très importante, souvent non disponible (par exemple à bord d'un véhicule) et en tout état de cause coûteuse.

La publication « 3POD : a high performance parallel antenna pointing mechanism » L. Bernabe et al, ESMATS 2013, Noordwijk, The Netherlands, 25-27 septembre 2013 décrit un mécanisme à architecture parallèle à trois chaînes cinématiques dans lequel les dimensions du mobile et du socle sont identiques, et un procédé de commande de ce mécanisme en boucle ouverte à partir de tables de pilotage enregistrées. Un tel procédé de commande ne permet cependant pas de contrôler les trajectoires du mobile entre deux positions initiale et finale. En conséquence ces trajectoires ne sont ni maîtrisées, ni optimisées. En outre, il s'avère qu'il est possible que ces trajectoires sortent du domaine de pointage, pouvant aboutir à un blocage du mécanisme, ou en tout cas à un défaut de positionnement du mécanisme. Et du fait que la commande est en boucle ouverte, ce défaut n'est pas nécessairement détecté ou corrigé.

Il s'avère en outre que la géométrie d'un tel mécanisme à architecture parallèle peut présenter en pratique des singularités de rigidité, c'est-à-dire des positions dans lesquelles les possibilités de commande du mécanisme ne sont plus garanties. En particulier, lorsque deux des angles de base sont égaux à 90°, le plan contenant les axes de base contient l'avant-bras de mobile dont l'angle de base est différent de 90°. Or, de telles singularités de rigidité doivent être détectées et exclues du domaine de pointage, ce qui diminue d'autant ce dernier.

L'invention vise donc à pallier ces inconvénients en proposant un mécanisme à architecture parallèle tel que mentionné ci-dessus, qui, par construction, soit exempt de telles singularités de rigidité.

Elle vise donc à proposer un tel mécanisme dans lequel le domaine de pointage n'est pas restreint par des singularités de rigidité.

Elle vise également à proposer un tel mécanisme dont la rigidité, notamment en position totalement déployée, est améliorée.

L'invention vise également à proposer un tel mécanisme à architecture parallèle adapté pour pouvoir être embarqué à bord d'un véhicule, notamment à bord d'un système spatial tel qu'un satellite artificiel, une sonde spatiale... Elle vise plus particulièrement à proposer un tel mécanisme particulièrement avantageux pour le pointage d'une antenne.

L'invention vise aussi en particulier à proposer un tel mécanisme susceptible d'être commandé en boucle ouverte sans nécessiter le calcul de relations complexes de commande par une électronique embarquée, en particulier qui ne nécessite pas la résolution en temps réel d'équations basées sur les lois cinématiques du mécanisme.

L'invention concerne donc un mécanisme comprenant :
- un socle,
- un mobile,
- au moins trois chaînes cinématiques interposées entre le socle et le mobile, dont trois chaînes cinématiques comprenant chacune :
   ∘ un bras, dit bras de base, ayant une extrémité, dite extrémité de base, reliée au socle par au moins une liaison pivot -notamment uniquement par une liaison pivot- selon un axe de pivot, dit axe de base, les différents axes de base des différentes chaînes cinématiques étant non concourants en un même point,
   ∘ un actionneur rotatif, dit actionneur de base, contrôlant une position angulaire, dite angle de base, du bras de base autour de l'axe de base par rapport au socle,
   ∘ un bras, dit avant-bras de mobile, ayant une extrémité, dite extrémité de mobile, reliée au mobile par au moins une liaison pivot -notamment uniquement par une liaison pivot- selon un axe de pivot, dit axe de mobile, les différents axes de mobile des différentes chaînes cinématiques étant non concourants en un même point,
   ∘ un dispositif d'articulation, dit dispositif d'articulation de coude, reliant le bras de base et l'avant-bras de mobile et comprenant au moins :
      - une rotation selon un axe, dit axe de bras, non parallèle à l'axe de base,
      - une rotation selon un axe, dit axe de coude, non parallèle à l'axe de bras,
      - une rotation selon un axe, dit axe d'avant-bras, non parallèle à l'axe de coude,
      - l'axe de base, l'axe de bras et l'axe de coude étant non parallèles deux à deux,
- les différentes chaînes cinématiques et les différents actionneurs de base permettant un contrôle de position et un déplacement du mobile par rapport au socle selon au moins deux degrés de liberté, caractérisé en ce que les extrémités de base et les extrémités de mobile sont agencées de telle sorte qu'une sphère théorique minimum contenant les extrémités de base, dite sphère de base, présente un rayon différent du rayon d'une sphère théorique minimum contenant les extrémités de mobile, dite sphère de mobile.

Dans les modes de réalisation où les extrémités de mobile sont coplanaires, la sphère de mobile peut être réduite à un cercle théorique minimum, dit cercle de mobile, contenant les extrémités de mobile et ayant le même rayon que la sphère de mobile ; dans les modes de réalisation où les extrémités de base sont coplanaires, la sphère de base peut être réduite à un cercle théorique minimum, dit cercle de base, contenant les extrémités de base et ayant le même rayon que la sphère de base. Dans les modes de réalisation où les extrémités de mobile sont coplanaires et où les extrémités de base sont coplanaires, les extrémités de base et les extrémités de mobile sont agencées de telle sorte qu'un cercle théorique minimum, dit cercle de base, contenant les extrémités de base présente un rayon différent du rayon d'un cercle théorique minimum, dit cercle de mobile, contenant les extrémités de mobile.

La sphère théorique minimum, ou le cercle théorique minimum, contenant un ensemble de points est la plus petite sphère ou, respectivement, le plus petit cercle, pouvant être défini(e) passant par ces points ou les contenant ; on sait qu'une telle sphère minimum ou un tel cercle minimum existe et est unique pour tout ensemble de points (cf. par exemple http://web.archive.org/web/20150928210517/https://fr.wikipedia.org/wiki/Probl%C 3%A8me_du_cercle_minimum).

Dans les modes de réalisation dans lesquels le mécanisme comprend uniquement trois chaînes cinématiques, trois extrémités de base des bras de base selon un triangle acutangle ou rectangle et trois extrémités de mobile des avant-bras de mobile selon un triangle acutangle ou rectangle, le cercle de base est le cercle circonscrit aux extrémités de base des bras de base, et le cercle de mobile est le cercle circonscrit aux extrémités de mobile des avant-bras de mobile. Dans les modes de réalisation dans lesquels le mécanisme comprend uniquement trois chaînes cinématiques, trois extrémités de base des bras de base selon un triangle obtusangle et trois extrémités de mobile des avant-bras de mobile selon un triangle obtusangle, le cercle de base est le cercle qui a pour diamètre le côté opposé à l'angle obtus du triangle des extrémités de base, et le cercle de mobile est le cercle qui a pour diamètre le côté opposé à l'angle obtus du triangle des extrémités de mobile.

Dans les modes de réalisation dans lesquels le mécanisme comprend plus de trois chaînes cinématiques, les extrémités de mobile sont coplanaires et les extrémités de base sont coplanaires, comme il n'existe en général pas de cercle circonscrit à plus de trois points, le cercle de base est le cercle théorique minimum contenant les extrémités de base des bras de base, c'est-à-dire le cercle circonscrit à trois extrémités de base et contenant chaque autre extrémité de base ; et le cercle de mobile est le cercle théorique minimum contenant les extrémités de mobile des avant-bras de mobile, c'est-à-dire le cercle circonscrit à trois extrémités de mobile et contenant chaque autre extrémité de mobile.

Alors que tous les mécanismes antérieurs à architecture parallèle prévoient au contraire des rayons identiques de la sphère de base (ou du cercle de base) et de la sphère de mobile (ou du cercle de mobile) pour simplifier les équations de pilotage, les inventeurs ont déterminé avec surprise que le simple fait de prévoir des rayons différents permet de s'affranchir, par géométrie, des singularités de rigidité. D'autre part, cette différence de rayon augmente la fréquence propre du premier mode propre du mécanisme, et donc améliore sa rigidité, notamment en configuration déployée.

Par ailleurs, si toute différence de rayons supprime en théorie les singularités de rigidité du point de vue géométrique, le fonctionnement pratique du mécanisme dépend aussi des frottements et des rigidités des différentes pièces constituant ce dernier. En conséquence, cette différence de rayons de la sphère de base (ou du cercle de base) et de la sphère de mobile (ou du cercle de mobile) doit être suffisante pour, compte tenu des frottements et des rigidités des différentes pièces constituant le mécanisme, permettre sa commande et son fonctionnement dans tout le domaine de pointage en empêchant tout risque de blocage dans les positions proches des singularités de rigidité théoriquement supprimées par la différence géométrie que des rayons.

Dans une première variante d'un mécanisme selon l'invention, le rayon de la sphère de base est supérieur au rayon de la sphère de mobile. Cette première variante présente notamment l'avantage d'un volume déplacé plus faible, d'une masse déplacée plus faible et d'un espace disponible plus important au niveau du socle. Dans une deuxième variante préférentielle d'un mécanisme selon l'invention le rayon de la sphère de base est inférieur au rayon de la sphère de mobile. Cette deuxième variante présente notamment l'avantage de présenter un espace disponible plus important sur le mobile.

Avantageusement et selon l'invention, ledit axe de bras est non parallèle -notamment orthogonal, perpendiculaire ou de préférence non sécant-à l'axe de base. En outre avantageusement et selon l'invention, l'axe de mobile est non parallèle -notamment orthogonal, perpendiculaire ou de préférence non sécant-à l'axe d'avant-bras.

Par ailleurs, avantageusement et selon l'invention, ledit axe de coude est non parallèle -notamment orthogonal, perpendiculaire ou de préférence non sécant- à l'axe de bras.

En outre avantageusement et selon l'invention, ledit axe de coude est non parallèle -notamment orthogonal, perpendiculaire ou de préférence non sécant- à l'axe d'avant-bras.

Par ailleurs, dans certains modes de réalisation d'un mécanisme selon l'invention le dispositif d'articulation de coude comprend une liaison rotule. Une liaison rotule est une liaison à point central, c'est-à-dire pouvant être assimilée à trois liaisons pivot d'axes perpendiculaires.

Cela étant, dans d'autres modes de réalisation, ce dispositif d'articulation de coude peut être formé d'une pluralité de liaisons pivot.

Ainsi, dans certains modes de réalisation d'un mécanisme selon l'invention le dispositif d'articulation de coude comprend :
- un bras, dit bras de coude, prolongeant le bras de base et relié au bras de base par une liaison pivot selon ledit axe de bras,
- un bras, dit avant-bras de coude, prolongeant le bras de coude et relié au bras de coude par une articulation de coude comprenant au moins une liaison pivot -notamment uniquement une liaison pivot- selon ledit axe de coude,
- une liaison pivot reliant l'avant-bras de coude à l'avant-bras de mobile selon l'axe d'avant-bras.

En outre, avantageusement et selon l'invention chaque axe de base est non parallèle à une direction longitudinale du bras de base passant par l'extrémité de base et par le dispositif d'articulation de coude, notamment par une extrémité du bras de base à laquelle le bras de coude est relié par ladite liaison pivot selon l'axe de bras. De préférence, chaque axe de base est perpendiculaire à ladite direction longitudinale du bras de base. Rien n'empêche cependant de prévoir au contraire un angle différent de 90° entre chaque axe de base et la direction longitudinale du bras de base correspondant. En outre, de préférence, les axes de base sont coplanaires. Rien n'empêche cependant de prévoir toute autre disposition dans un mécanisme selon l'invention, notamment selon les applications envisagées.

De même, avantageusement et selon l'invention chaque axe de mobile est non parallèle à une direction longitudinale de l'avant-bras de mobile passant par l'extrémité de mobile et par le dispositif d'articulation de coude, notamment par une extrémité de l'avant-bras de mobile à laquelle l'avant-bras de coude est relié par ladite liaison pivot selon l'axe d'avant-bras. De préférence, chaque axe de mobile est perpendiculaire à ladite direction longitudinale de l'avant-bras de mobile. Rien n'empêche cependant de prévoir au contraire un angle différent de 90° entre chaque axe de mobile et la direction longitudinale de l'avant-bras de mobile correspondant. En outre, de préférence, les axes de mobile sont coplanaires. Rien n'empêche cependant de prévoir toute autre disposition dans un mécanisme selon l'invention, notamment selon les applications envisagées.

Par ailleurs, les différentes chaînes cinématiques sont adaptées pour pouvoir déterminer un domaine de positions possibles, dit domaine de pointage, du mobile selon chaque degré de liberté, à partir uniquement des valeurs des différents angles de base. Dans certains modes de réalisation préférentiels, un mécanisme selon l'invention comprend uniquement trois chaînes cinématiques de mêmes cinématiques et dimensions, de préférence uniformément réparties angulairement, à 120° l'une de l'autre. En outre, avantageusement, chaque chaîne cinématique d'un mécanisme selon l'invention comprend un et un seul actionneur, à savoir l'actionneur de base contrôlant l'angle de base du bras de base de la chaîne cinématique. L'invention s'applique néanmoins également à d'autres types de mécanismes à architecture parallèle dans lesquels les mêmes problèmes se posent.

Avantageusement et selon l'invention, les degrés de liberté du mobile sont déterminés par au moins :
∘ une première coordonnée repérant la position du mobile par rapport à un repère fixe du socle,
∘ une deuxième coordonnée repérant la position du mobile par rapport à un repère fixe du socle.

L'invention peut être mise en œuvre avec différents systèmes de coordonnées repérant la position du mobile par rapport au socle. Rien n'empêche par exemple d'utiliser un système de coordonnées cartésiennes ou paramétriques. Néanmoins, avantageusement et selon l'invention, on utilise un système de coordonnées sphériques.

Ainsi, dans certains modes de réalisation préférentiels, avantageusement et selon l'invention :
- ladite première coordonnée est un angle de site formé par un axe, dit axe de site, du mobile par rapport à un premier axe d'un repère fixe du socle,
- ladite deuxième coordonnée est un angle d'azimut formé entre un deuxième axe du repère fixe du socle perpendiculaire audit premier axe, et un axe, dit axe d'azimut, projection de l'axe de site du mobile sur un plan contenant ledit deuxième axe et perpendiculaire au premier axe.

Dans toute la description, il est fait référence à l'angle de site en tant que première coordonnée et à l'angle d'azimut en tant que deuxième coordonnée. Il doit être cependant entendu que l'angle de site peut être remplacé par toute autre première coordonnée et l'angle d'azimut peut être remplacé par toute autre deuxième coordonnée d'un autre système de coordonnées.

Dans certains modes de réalisation (avantageux notamment dans les applications de pointage, par exemple pour le pointage une antenne portée par le mobile), les positions relatives en translation du mobile selon une troisième coordonnée -notamment en translation selon l'axe de site (ou zoom)- par rapport au socle sont prédéterminées (par exemple par optimisation du déplacement du mobile vis-à-vis d'autres contraintes telles que l'absence de collision) lorsque l'angle de site et l'angle d'azimut sont déterminés. Dans d'autres modes de réalisation, le zoom du mobile n'est pas imposé par construction à partir des valeurs de l'angle de site et de l'angle d'azimut.

Ainsi, dans certains modes de réalisation d'un mécanisme selon l'invention, les différentes chaînes cinématiques sont adaptées pour permettre, sous l'effet des différents actionneurs de base, un contrôle de position et un déplacement du mobile par rapport au socle selon au moins trois degrés de liberté comprenant ledit angle de site, ledit angle d'azimut, et une translation selon l'axe de site, dite zoom.

L'invention s'étend également à un véhicule -notamment à un système spatial, en particulier à un satellite artificiel- caractérisé en ce qu'il comprend au moins un mécanisme selon l'invention. Un mécanisme selon l'invention peut en particulier être utilisé pour assurer le pointage d'une antenne portée par le mobile.

L'invention permet ainsi d'éviter, de façon simple, les singularités de rigidité dans le domaine de pointage du mobile.

Un mécanisme selon l'invention peut être commandé par un dispositif de commande en boucle ouverte à partir de tables de valeurs, comprenant une unité informatique, c'est-à-dire une unité de traitement de données numériques et de calcul apte à sélectionner un algorithme et à l'exécuter. Il est à noter que cette unité de commande peut être entièrement embarquée à bord d'un véhicule selon l'invention incorporant un mécanisme selon l'invention doté du dispositif de commande. Cela étant, rien n'empêche au contraire que l'unité de commande soit moins pour partie formée d'un dispositif distant, par exemple un système sol, seuls les signaux de commande des actionneurs de base étant transmis aux actionneurs depuis le sol. L'unité de commande peut également être formée d'une pluralité de dispositifs distants les uns des autres et reliés les uns aux autres en réseau, par exemple via le réseau Internet.

L'invention concerne également un mécanisme et un véhicule -notamment un système spatial tel qu'un satellite artificiel- caractérisés en combinaison par tout ou partie des caractéristiques mentionnées ci-dessus ou ci-après.

D'autres buts, caractéristiques et avantages de l'invention apparaîtront à la lecture de la description suivante donnée à titre non limitatif et qui se réfère aux figures annexées dans lesquelles :
- la figure 1 est un schéma cinématique de principe d'un mécanisme selon un mode de réalisation de l'invention,
- la figure 2 est un schéma cinématique de principe d'une variante de réalisation d'une chaîne cinématique d'un mécanisme selon l'invention,
- la figure 3a est un schéma cinématique de principe illustrant un exemple de position générant une singularité de rigidité dans un mécanisme non conforme à l'invention,
- les figures 3b et 3c sont des schémas cinématique de principe illustrant le même exemple de position que la figure 3a, mais avec des mécanismes conformes à l'invention, exempts de singularité de rigidité.

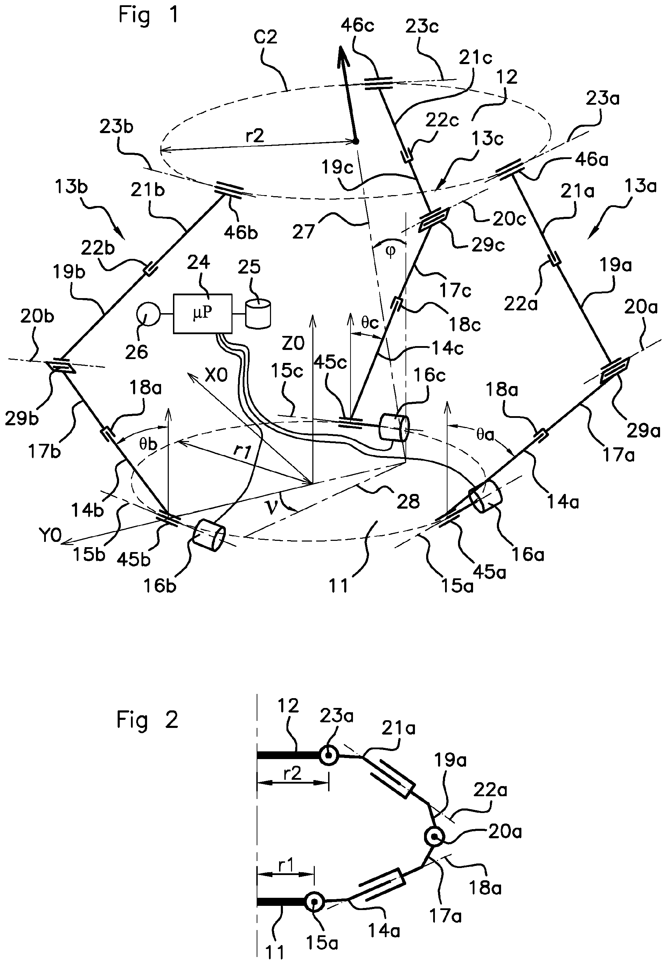

Un mécanisme selon le mode de réalisation de l'invention représenté schématiquement figure 1 comprend :
- un socle 11,
- un mobile 12,
- trois chaînes 13a, 13b, 13c cinématiques de mêmes dimensions et cinématiques interposées entre le socle 11 et le mobile 12.

Chaque chaîne 13a, 13b, 13c cinématique comprend :
- un bras rigide, dit bras 14a, 14b, 14c de base, ayant une extrémité, dite extrémité 45a, 45b, 45c de base, reliée au socle 11 par une liaison pivot selon un axe de pivot, dit axe 15a, 15b, 15c de base, les différents axes 15a, 15b, 15c de base des différentes chaînes cinématiques étant coplanaires non concourants (c'est-à-dire non sécants en un même point),
- un actionneur rotatif, dit actionneur 16a, 16b, 16c de base, contrôlant une position angulaire, dite angle θa, θb, θc de base, du bras 14a, 14b, 14c de base autour de l'axe 15a, 15b, 15c de base par rapport au socle 11,
- un bras rigide, dit bras 17a, 17b, 17c de coude, prolongeant le bras 14a, 14b, 14c de base et relié au bras 14a, 14b, 14c de base par une liaison pivot selon un axe de pivot, dit axe 18a, 18b, 18c de bras, non parallèle -notamment orthogonal, perpendiculaire (c'est-à-dire orthogonal et sécant) ou de préférence non sécant- à l'axe 15a, 15b, 15c de base,
- un bras rigide, dit avant-bras 19a, 19b, 19c de coude, prolongeant le bras 17a, 17b, 17c de coude et relié au bras 17a, 17b, 17c de coude par une articulation 29a, 29b, 29c de coude comprenant au moins une liaison pivot selon un axe de pivot, dit axe 20a, 20b, 20c de coude, non parallèle -notamment orthogonal, perpendiculaire ou de préférence non sécant- à l'axe 18a, 18b, 18c de bras,
- un bras rigide, dit avant-bras 21a, 21b, 21c de mobile, prolongeant l'avant-bras 19a, 19b, 19c de coude et relié à l'avant-bras 19a, 19b, 19c de coude par une liaison pivot selon un axe de pivot, dit axe 22a, 22b, 22c d'avant-bras, non parallèle -notamment orthogonal, perpendiculaire ou de préférence non sécant- à l'axe 20a, 20b, 20c de coude, ledit avant-bras 21a, 21b, 21c de mobile ayant une extrémité, dite extrémité 46a, 46b, 46c de mobile, reliée au mobile par une liaison pivot selon un axe de pivot, dit axe 23a, 23b, 23c de mobile, non parallèle -notamment orthogonal, perpendiculaire ou de préférence non sécant- à l'axe 22a, 22b, 22c d'avant-bras, les différents axes 23a, 23b, 23c de mobile des différentes chaînes 13a, 13b, 13c cinématiques étant coplanaires non concourants en un même point.

De préférence, chaque axe 15a, 15b, 15c de base est non parallèle à une direction longitudinale du bras 14a, 14b, 14c de base passant par l'extrémité de base et par une extrémité du bras 14a, 14b, 14c de base à laquelle le bras 17a, 17b, 17c de coude est relié par ladite liaison pivot selon l'axe de bras ; et chaque axe 23a, 23b, 23c de mobile est non parallèle à une direction longitudinale de l'avant-bras 21a, 21b, 21c de mobile passant par l'extrémité de mobile et par une extrémité de l'avant-bras de mobile à laquelle l'avant-bras 19a, 19b, 19c de coude est relié par ladite liaison pivot selon l'axe d'avant-bras.

De préférence, chaque axe de base est perpendiculaire à ladite direction longitudinale du bras de base. Rien n'empêche cependant de prévoir au contraire un angle différent de 90° entre chaque axe de base et la direction longitudinale du bras de base correspondant. En outre, de préférence, les axes de base sont coplanaires et les extrémités de base sont coplanaires, de préférence uniformément réparties angulairement, à 120° l'une de l'autre. Rien n'empêche cependant de prévoir toute autre disposition dans un mécanisme selon l'invention, notamment selon les applications envisagées.

De préférence, chaque axe de mobile est perpendiculaire à ladite direction longitudinale de l'avant-bras de mobile. Rien n'empêche cependant de prévoir au contraire un angle différent de 90° entre chaque axe de mobile et la direction longitudinale de l'avant-bras de mobile correspondant. En outre, de préférence, les axes de mobile sont coplanaires et les extrémités de mobile sont coplanaires, de préférence uniformément réparties angulairement, à 120° l'une de l'autre. Rien n'empêche cependant de prévoir toute autre disposition dans un mécanisme selon l'invention, notamment selon les applications envisagées.

Le bras 14a, 14b, 14c de base et/ou le bras 17a, 17b, 17c de coude et/ou l'avant-bras 19a, 19b, 19c de coude et/ou l'avant-bras 21a, 21b, 21c de mobile peuvent être rectilignes comme représenté figure 1, ou au contraire coudés, de préférence à convexité orientée vers l'extérieur pour augmenter l'espace disponible à l'intérieur du mécanisme comme représenté sur la figure 2 qui représente une variante d'une chaîne 13a cinématique dans laquelle tous ces bras 14a, 17a et avant-bras 19a, 21a sont coudés.

De préférence, les articulations 29a, 29b, 29c de coude sont des liaisons rotule. En outre, de préférence également, la longueur du bras 14a, 14b, 14c, 17a, 17b, 17c (c'est-à-dire du bras 14a, 14b, 14c de base et du bras 17a, 17b, 17c de coude qui le prolonge) et la longueur de l'avant-bras 19a, 19b, 19c, 21a, 21b, 21c (c'est-à-dire de l'avant-bras 19a, 19b, 19c de coude et de l'avant-bras 21a, 21b, 21c de mobile qui le prolonge) de chaque chaîne cinématique sont fixes et égales. Rien n'empêche cependant au contraire de prévoir des longueurs différentes.

Un exemple d'un tel mécanisme à cinq degrés de liberté est décrit avec ses différentes caractéristiques générales (à l'exception des caractéristiques propres à l'invention) dans la publication « 3POD : a high performance parallel antenna pointing mechanism » L. Bernabe et al, ESMATS 2013, Noordwijk, The Netherlands, 25-27 septembre 2013. En particulier, chaque actionneur 16a, 16b, 16c de base peut être formé d'un moteur pas à pas tel que décrit dans cette publication.

La position du mobile 12 par rapport au socle 11 est représentée par un vecteur, dit vecteur *n̅* de pointage, dont l'orientation angulaire (v, ϕ) par rapport à un repère fixe (*̅x̅*̅0̅, *̅y̅*̅0̅, *̅z̅*̅0̅) du socle 11 définit la direction de pointage du mobile 12 par rapport au socle 11. Cette orientation angulaire du vecteur *n̅* de pointage comprend un angle ϕ de site formé entre ce vecteur *n̅* de pointage et le vecteur *̅z̅*̅0̅ du repère fixe du socle 11, c'est-à-dire entre un axe, dit axe 27 de site, défini par le vecteur *n̅* de pointage solidaire du mobile 12 et l'axe z̅0̅ du repère fixe du socle 11. L'axe 27 de site est un axe d'un repère fixe par rapport au mobile 12, le vecteur *n̅* de pointage étant fixe dans ce repère fixe du mobile 12 et solidaire du mobile 12. Cette orientation angulaire du vecteur *n̅* de pointage comprend aussi un angle v d'azimut formé entre le vecteur projection du vecteur *n̅* de pointage dans le plan (*̅x̅*̅0̅*,* *̅y̅*̅0̅) du repère fixe du socle 11 et l'un *̅y̅*̅0̅ des vecteurs de ce plan, c'est-à-dire entre un axe, dit axe 28 d'azimut, défini par le vecteur projection du vecteur *n̅* de pointage dans le plan (*̅x̅*̅0̅, *̅y̅*̅0̅) du repère fixe du socle 11, et l'axe y0 du repère fixe du socle 11.

Les actionneurs 16a, 16b, 16c de base sont les seuls actionneurs des chaînes cinématiques du mécanisme selon l'invention, ce dernier étant donc exempt de tout autre actionneur. Autrement dit, chaque chaîne cinématique comprend un et un seul actionneur, qui est l'actionneur 16a, 16b, 16c de base.

Les chaînes cinématiques du mécanisme selon l'invention représenté sur les figures sont telles que l'angle ϕ de site, l'angle v d'azimut et le zoom Z (translation selon l'axe 27 de site) sont les trois seuls degrés de liberté du mobile 12 par rapport au socle 11. En conséquence, chaque triplet (v, ϕ, Z) définit une et une seule position du mobile 12 par rapport au socle 11, et chaque triplet de valeurs (θa, θb, θc) des angles θa, θb, θc de base commandé par les actionneurs 16a, 16b, 16c de base correspond à une et une seule valeur de (v, ϕ, Z), c'est-à-dire à une et une seule position du mobile 12 par rapport au socle 11.

Dans certains modes de réalisations préférentiels, par exemple pour les applications dans lesquelles le mobile 12 supporte une antenne, l'axe de site et le vecteur *n̅* de pointage sont choisis de façon à ce que ϕ = 0 (orientation ou nadir) pour θa = θb = θc, les différentes chaînes cinématiques ayant la même forme et étant uniformément angulairement réparties autour de l'axe 27 de site dans cette orientation, à 120° l'une de l'autre.

Les extrémités 45a, 45b, 45c de base et les extrémités 46a, 46b, 46c de mobile sont agencées par rapport au socle 11, et, respectivement par rapport au mobile 12, de telle sorte qu'une sphère théorique minimum, dite sphère de base, contenant les extrémités 45a, 45b, 45c de base (et les liaisons pivot d'articulation de ces extrémités de base au socle 11) présente un rayon r1 différent du rayon r2 d'une sphère théorique minimum, dite sphère de mobile, contenant les extrémités 46a, 46b, 46c de mobile (et des liaisons pivot d'articulation de ces extrémités de mobile au mobile 12). Ainsi, les dimensions du socle 11 prises entre ses articulations aux chaînes cinématiques sont différentes des dimensions du mobile 12 prises entre ses articulations aux chaînes cinématiques, le mécanisme selon l'invention présentant une dissymétrie de géométrie des articulations entre le socle 11 et le mobile 12.

Les axes 15a, 15b, 15c de base étant coplanaires, il existe un cercle théorique minimum, dit cercle C1 minimum de base, passant par les extrémités 45a, 45b, 45c de base et les liaisons pivot reliant ces extrémités 45a, 45b, 45c de base au socle 11, et ce cercle C1 minimum de base est le cercle inscrit aux extrémités 45a, 45b, 45c de base. Ce cercle C1 minimum de base est un cercle diamétral de la sphère de base et présente un rayon de valeur r1.

De même, les axes 23a, 23b, 23c de mobile étant coplanaires, il existe un cercle théorique minimum, dit cercle C2 minimum de mobile, passant par les extrémités 46a, 46b, 46c de mobile et les liaisons pivot reliant ces extrémité 46a, 46b, 46c de mobile au mobile 12, et ce cercle C2 minimum de mobile est le cercle inscrit aux extrémité 46a, 46b, 46c de mobile. Ce cercle C2 minimum de mobile est un cercle diamétral de la sphère de mobile et présente un rayon de valeur r2.

Selon l'invention, le rayon r1 de la sphère de base et du cercle C1 minimum de base est différent du rayon r2 de la sphère de mobile et du cercle C2 minimum de mobile : r1 ≠ r2. De préférence, comme représenté figure 2, le rayon r2 de la sphère de mobile et du cercle C2 minimum de mobile est supérieur au rayon r1 de la sphère de base et du cercle C1 minimum de base : r2 > r1.

En outre, la valeur absolue de la différence |r2 - r1| entre ces rayons est suffisante pour éviter en pratique tout risque de singularité de rigidité, compte tenu par ailleurs également de la rigidité des chaînes cinématiques, c'est-à-dire des bras et des liaisons, et des frottements. Par exemple, le rapport |r2 - r1| / r1 de cette valeur absolue de la différence |r2 - r1| sur le rayon r1 de la sphère de base et du cercle C1 minimum de base est supérieur à 1%, avantageusement supérieur à 5 %, en particulier supérieur à 10 %. Cela étant, de préférence, la valeur absolue de la différence n'est pas non plus trop importante. Par exemple, le rapport |r2 - r1| / r1 de cette valeur absolue de la différence |r2 - r1| sur le rayon r1 de la sphère de base et du cercle C1 minimum de base est inférieur à 100%, avantageusement inférieur à 50 %, en particulier inférieur à 25 %, par exemple de l'ordre de 20%.

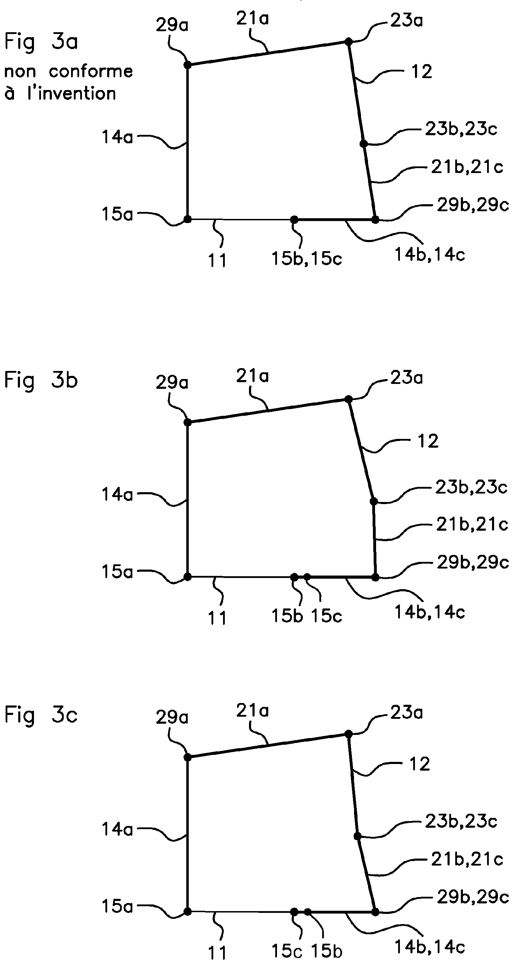

La figure 3a représente vu de profil un mécanisme non conforme à l'invention dans lequel r1 = r2, θa = 0°, θb = θc = 90°. Dans cette variante, les articulations 29a, 29b, 29c de coude sont des liaisons rotule. Dans cette représentation de la figure 3a, deux chaînes cinématiques sont représentées superposées. On peut constater l'existence d'une singularité de rigidité du fait de l'alignement du mobile 12 avec les avant-bras 21b, 21c de mobile de ces deux chaînes cinématiques.

La figure 3b représente vu de profil un mécanisme similaire à celui de la figure 3a mais conforme à l'invention et dans lequel r1 < r2, θa = 0°, θb = θc = 90°. On peut constater que la singularité de rigidité a disparu.

La figure 3c représente vu de profil un mécanisme similaire à celui de la figure 3a mais conforme à l'invention et dans lequel r1 > r2, θa = 0°, θb = θc = 90°. On peut constater que la singularité de rigidité a disparu. La différence de valeurs des rayons est peu visible sur les figures 3b et 3c, du fait qu'elle est faible et à cause des effets de perspective.

Le dispositif de commande selon l'invention comprend une unité 24 de commande, par exemple sous forme d'un dispositif informatique de traitement en temps réel de données numériques comprenant au moins un microprocesseur et/ou au moins un microcontrôleur, des mémoires associées, et des périphériques associés. En particulier, l'unité 24 de commande est reliée à chacun des actionneurs 16a, 16b, 16c de façon à pouvoir le commander selon toute position angulaire de ce dernier, c'est-à-dire selon toute valeur de l'angle θa, θb, θc de base. À cet effet, l'unité 24 de commande comporte en particulier au moins une carte de puissance apte à élaborer un signal d'alimentation électrique à destination de chaque actionneur en fonction de la valeur de l'angle θa, θb, θc de base qu'il doit imposer. L'unité 24 de commande est alimentée électriquement pour permettre son fonctionnement.

Le dispositif de commande selon l'invention comporte également au moins une mémoire 25 de masse. Un dispositif de commande selon l'invention présente notamment l'avantage de pouvoir être réalisé avec un poids extrêmement faible, un encombrement réduit, et une très faible consommation énergétique, de sorte qu'il peut être embarqué, avec le mécanisme selon l'invention, à bord d'un véhicule, tel qu'un système spatial selon l'invention. Ainsi, dans ces modes de réalisation, le dispositif de commande peut être solidaire du socle 11.

Le dispositif et le procédé de commande selon l'invention permettent de modifier la position du mobile 12 par rapport au socle 11, c'est-à-dire de passer d'une position initiale (vi, ϕi, Zi) à une position finale (vf, ϕf, Zf) de consigne transmise à l'unité 24 de commande sous forme d'un signal 26 de consigne.

Pour éviter d'avoir à effectuer des calculs temps réel lourds et complexes, pour chaque chaîne 13a, 13b, 13c cinématique, et donc pour chaque actionneur 16a, 16b, 16c, une table de valeurs prédéterminées est préalablement élaborée et enregistrée dans la mémoire de masse 25, cette table de valeurs prédéterminées déterminant une valeur de l'angle θa, θb, θc de base de cette chaîne cinématique correspondant au moins à chaque couple (ϕ, v) de valeurs de l'angle de site et de l'angle d'azimut du mobile. Le nombre de tables de valeurs est égal au nombre d'actionneurs 16a, 16b, 16c de base et au nombre de chaînes 13a, 13b, 13c cinématiques du mécanisme, par exemple égal à 3.

Dans certaines applications et/ou dans certains modes de réalisation, pour chaque couple (ϕ, v) de valeurs de l'angle de site et de l'angle d'azimut du mobile, une valeur du zoom Z est prédéterminée (par exemple par optimisation du déplacement du mobile vis-à-vis d'autres contraintes telles que l'absence de collision). Chaque table de valeurs prédéterminées peut alors être une table à deux dimensions. Dans chaque table de valeurs, l'angle ϕ de site varie par exemple entre 0° et 90°, avec un pas de variation qui dépend de la précision requise pour la commande de pointage du mécanisme, par exemple égal à 0,1°. L'angle v d'azimut varie entre -180° et +180°, avec un pas de variation qui peut être égal ou différent de celui de l'angle de site, par exemple égal à 0,1°. Chaque cellule d'une table de valeurs prédéterminées donne une valeur de l'angle de base de la chaîne cinématique correspondante. Par exemple, toutes les cellules d'une même ligne d'une table de valeurs prédéterminées ont une même valeur de l'angle ϕ de site, tandis que toutes les cellules d'une même colonne d'une table de valeurs prédéterminées ont une même valeur de l'angle v d'azimut.

Dans d'autres applications et/ou dans d'autres modes de réalisation, pour chaque couple (ϕ, v) de valeurs de l'angle de site et de l'angle d'azimut du mobile, la valeur du zoom Z n'est pas prédéterminée et peut varier. Chaque table de valeurs prédéterminées est alors une table à trois dimensions, chaque cellule étant à l'intersection de deux lignes orthogonales (une ligne frontale et une ligne sagittale) et d'une colonne. Chaque cellule d'une table de valeurs prédéterminées donne une valeur de l'angle de base de la chaîne cinématique correspondante. Par exemple, toutes les cellules d'une même ligne frontale d'une table de valeurs prédéterminées ont une même valeur de l'angle ϕ de site, tandis que toutes les cellules d'une même colonne d'une table de valeurs prédéterminées ont une même valeur de l'angle v d'azimut, et toutes les cellules d'une même ligne sagittale d'une table de valeurs prédéterminées ont une même valeur de zoom Z.

Compte tenu de la cinématique du mécanisme, l'angle de site et l'angle d'azimut du mobile, et éventuellement le zoom Z, ne peuvent évoluer que dans un domaine prédéterminé de valeurs de (v, ϕ) ou (v, ϕ, Z), dit domaine de pointage. Autrement dit, certaines valeurs (vn, ϕn) ou (vn, ϕn, Zn) de l'angle d'azimut et de l'angle de site, et éventuellement du zoom Z, et donc des triplets (θan, θbn, θcn) des angles de base correspondant à ces valeurs, sont interdites.

Dans toute la suite, on considère que les valeurs de zoom sont prédéterminées pour chaque couple (ϕ, v) de valeurs de l'angle de site et de l'angle d'azimut du mobile. Il est cependant possible de généraliser toutes les caractéristiques décrites ci-après et l'invention dans le cas où le zoom Z n'est pas prédéterminé.

Ce domaine de pointage est représenté par lesdites tables de valeurs par le fait que la valeur de l'angle θa, θb, θc de base enregistrée dans chaque table de valeurs prédéterminées associée à un couple interdit de valeurs (vn, ϕn) de l'angle d'azimut et de l'angle de site qui n'appartient pas au domaine de pointage, est une valeur de l'angle de base appartenant au domaine de pointage et qui correspond à couple de valeurs (v, ϕ) de l'angle d'azimut de l'angle de site appartenant au domaine de pointage qui est le plus proche du couple interdit de valeurs (vn, ϕn).

Chaque table de valeurs prédéterminées peut être élaborée par exemple et de préférence par des mesures effectuées directement sur le mécanisme, qui peut à cet effet être doté de capteurs de position angulaire associés à chaque actionneur 16a, 16b, 16c, et d'au moins un laser fixé sur le mobile 12 par exemple pour émettre un faisceau lumineux selon le vecteur *n̅* de pointage, en direction d'une hémisphère de mesure sur laquelle la position du point lumineux du faisceau est repérée. En variante, dans certaines applications, rien n'empêche d'élaborer chaque table de valeurs prédéterminées par simulation logicielle, voire même par calcul théorique analytique à partir de la connaissance de la cinématique du mécanisme.

L'invention peut faire l'objet de nombreuses variantes de réalisation et de diverses applications autres que celles décrites ci-dessus et représentées sur les figures. Elle s'applique en particulier à un mécanisme à architecture parallèle présentant un nombre de chaînes cinématiques, semblables ou non, différent de trois, et dont la cinématique peut être différente. Si les axes 15a, 15b, 15c de base et/ou les axes 23a, 23b, 23c de mobile ne sont pas coplanaires, les rayons r1 et r2 à considérer ne sont pas les rayons des cercles théoriques minimum, mais ceux des sphères théoriques minimum (sphère de base et sphère de mobile). L'invention est particulièrement avantageuse pour la commande d'un mécanisme embarqué à bord d'un système spatial, par exemple pour le pointage une antenne, mais peut tout aussi bien s'appliquer à d'autres véhicules dans lesquels les mêmes problèmes se posent.

## Revendications

1. Mécanisme comprenant :
- un socle (11),
- un mobile (12),
- au moins trois chaînes (13a, 13b, 13c) cinématiques interposées entre le socle et le mobile, dont trois chaînes (13a, 13b, 13c) cinématiques comprenant chacune :
∘ un bras, dit bras (14a, 14b, 14c) de base, ayant une extrémité, dite extrémité (45a, 45b, 45c) de base, reliée au socle (11) par au moins une liaison pivot selon un axe de pivot, dit axe (15a,15b,15c) de base, les différents axes de base
des différentes chaînes cinématiques étant non concourants en un même point,
∘ un actionneur rotatif, dit actionneur (16a, 16b, 16c) de base, contrôlant une position angulaire, dite angle (θa, θb, θc) de base, du bras de base autour de l'axe de base par rapport au socle (11),
∘ un bras, dit avant-bras (21a, 21b, 21c) de mobile, ayant une extrémité, dite extrémité (46a, 46b, 46c) de mobile, reliée au mobile par au moins une liaison pivot selon un axe de pivot, dit axe (23a, 23b, 23c) de mobile, les différents axes de mobile des différentes chaînes (13a, 13b, 13c) cinématiques étant non concourants en un même point,
∘ un dispositif d'articulation, dit dispositif d'articulation de coude, reliant le bras (14a, 14b, 14c) de base et l'avant-bras (21a, 21b, 21c) de mobile et comprenant au moins :
• une rotation selon un axe, dit axe (18a,18b,18c) de bras, non parallèle à l'axe (15a, 15b, 15c) de base,
• une rotation selon un axe, dit axe (20a,20b,20c) de coude, non parallèle à l'axe de bras,
• une rotation selon un axe, dit axe (22a,22b,22c) d'avant-bras, non parallèle à l'axe de coude,
• l'axe (15a, 15b, 15c) de base, l'axe (18a,18b,18c) de bras et l'axe (20a,20b,20c) de coude étant non parallèles deux à deux,
- les différentes chaînes cinématiques et les différents actionneurs (16a, 16b, 16c) de base permettant un contrôle de position et un déplacement du mobile (12) par rapport au socle (11) selon au moins deux degrés de liberté,
**caractérisé en ce que** les extrémités (45a, 45b, 45c) de base et les extrémités (46a, 46b, 46c) de mobile sont agencées de telle sorte qu'une sphère théorique minimum contenant les extrémités (45a, 45b, 45c) de base, dite sphère de base, présente un rayon (r1) différent du rayon (r2) d'une sphère théorique minimum contenant les extrémités (46a, 46b, 46c) de mobile, dite sphère de mobile.

2. Mécanisme selon la revendication 1, **caractérisé en ce que** le rayon (r1) de la sphère de base est inférieur au rayon (r2) de la sphère de mobile.

3. Mécanisme selon l'une des revendications 1 ou 2, **caractérisé en ce que** chaque extrémité (45a, 45b, 45c) de base est reliée au socle (11) par une liaison pivot et **en ce que** l'axe (18a, 18b, 18c) de bras est orthogonal à l'axe (15a, 15b, 15c) de base.

4. Mécanisme selon l'une des revendications 1 à 3, **caractérisé en ce que** chaque extrémité (46a, 46b, 46c) de mobile est reliée au mobile par une liaison pivot et **en ce que** l'axe (23a, 23b, 23c) de mobile est orthogonal à l'axe (22a, 22b, 22c) d'avant-bras.

5. Mécanisme selon l'une des revendications 1 à 4, **caractérisé en ce que** l'axe de coude est orthogonal à l'axe (18a, 18b, 18c) de bras et à l'axe (22a, 22b, 22c) d'avant-bras.

6. Mécanisme selon l'une des revendications 1 à 5, **caractérisé en ce que** le dispositif d'articulation de coude comprend :
- un bras, dit bras (17a, 17b, 17c) de coude, prolongeant le bras (14a, 14b, 14c) de base et relié au bras de base par une liaison pivot selon l'axe de bras,
- un bras, dit avant-bras (19a, 19b, 19c) de coude, prolongeant le bras de coude et relié au bras de coude par au moins une liaison pivot selon l'axe de coude, l'avant-bras (21a, 21b, 21c) de mobile prolongeant l'avant-bras de coude,
- une liaison pivot reliant l'avant-bras de coude à l'avant-bras (21a, 21b, 21c) de mobile selon l'axe (22a, 22b, 22c) d'avant-bras.

7. Mécanisme selon l'une des revendications 1 à 6, **caractérisé en ce que** le dispositif d'articulation (29a, 29b, 29c) de coude comprend une liaison rotule.

8. Mécanisme selon l'une des revendications 1 à 7, **caractérisé en ce que** chaque axe (15a, 15b, 15c) de base est non parallèle à une direction longitudinale du bras (14a, 14b, 14c) de base passant par l'extrémité de base et par le dispositif d'articulation de coude.

9. Mécanisme selon la revendication 8, **caractérisé en ce que** chaque axe (15a, 15b, 15c) de base est perpendiculaire à ladite direction longitudinale du bras (14a, 14b, 14c) de base.

10. Mécanisme selon l'une des revendications 1 à 9, **caractérisé en ce que** les axes (15a, 15b, 15c) de base sont coplanaires.

11. Mécanisme selon l'une des revendications 1 à 10, **caractérisé en ce que** chaque axe (23a, 23b, 23c) de mobile est non parallèle à une direction longitudinale de l'avant-bras (21a, 21b, 21c) de mobile passant par l'extrémité de mobile et par le dispositif d'articulation de coude.

12. Mécanisme selon la revendication 11, **caractérisé en ce que** chaque axe (23a, 23b, 23c) de mobile est perpendiculaire à ladite direction longitudinale de l'avant-bras (21a, 21b, 21c) de mobile.

13. Mécanisme selon l'une des revendications 1 à 12, **caractérisé en ce que** les axes (23a, 23b, 23c) de mobile sont coplanaires.

14. Mécanisme selon l'une des revendications 1 à 13, **caractérisé en ce qu'**il comprend uniquement trois chaînes (13a, 13b, 13c) cinématiques de mêmes cinématiques et dimensions.

15. Véhicule -notamment système spatial- **caractérisé en ce qu'**il comprend au moins un mécanisme selon l'une des revendications 1 à 14.

## Patentansprüche

1. Mechanismus, umfassend:
- einen Sockel (11),
- ein Mobile (12),
- mindestens drei kinematische Ketten (13a, 13b, 13c), die zwischen dem Sockel und dem Mobile eingesetzt sind, wovon drei kinematische Ketten (13a, 13b, 13c) jeweils Folgendes umfassen:
° einen Basisarm (14a, 14b, 14c) genannten Arm, der ein Basisende (45a, 45b, 45c) genanntes Ende aufweist, das durch mindestens eine Schwenkverbindung entlang einer Basisachse (15a, 15b, 15c) genannten Schwenkachse mit dem Sockel (11) verbunden ist, wobei die verschiedenen Basisachsen der verschiedenen kinematischen Ketten nicht in einem selben Punkt zusammenlaufend sind,
° einen Basisbetätiger (16a, 16b, 16c) genannten Drehbetätiger, der eine Basiswinkel (*θa, θb, θc*) genannte Winkelposition des Basisarmes um die Basisachse herum in Bezug auf den Sockel (11) kontrolliert,
° einen Mobile-Vorderarm (21a, 21b, 21c) genannten Arm, der ein Mobile-Ende (46a, 46b, 46c) genanntes Ende aufweist, das durch mindestens eine Schwenkverbindung entlang einer Mobile-Achse (23a, 23b, 23c) genannten Schwenkachse mit dem Mobile verbunden ist, wobei die verschiedenen Mobile-Achsen der verschiedenen kinematischen Ketten (13a, 13b, 13c) nicht in einem selben Punkt zusammenlaufend sind,
° eine Biegegelenksvorrichtung genannte Gelenksvorrichtung, die den Basisdarm (14a, 14b, 14c) und den Mobile-Vorderarm (21a, 21b, 21c) verbindet, und mindestens Folgendes umfasst:
• eine Rotation um eine Armachse (18a, 18b, 18c) genannte Achse, die nicht parallel zu der Basisachse (15a, 15b, 15c) ist,
• eine Rotation um eine Biegeachse (20a, 20b, 20c) genannte Achse, die nicht parallel zu der Armachse ist,
• eine Rotation um eine Vorderarm-Achse (22a, 22b, 22c) genannte Achse, die nicht parallel zu der Biegeachse ist,
• wobei die Basisachse (15a, 15b, 15c), die Armachse (18a, 18b, 18c) und die Biegeachse (20a, 20b, 20c) nicht paarweise parallel sind,
- wobei die verschiedenen kinematischen Ketten und die verschiedenen Basisbetätiger (16a, 16b, 16c) eine Positionskontrolle und eine Verschiebung des Mobiles (12) in Bezug auf den Sockel (11) entsprechend mindestens zwei Freiheitsgraden ermöglichen,
**dadurch gekennzeichnet, dass** die Basisenden (45a, 45b, 45c) und die Mobile-Enden (46a, 46b, 46c) derart angeordnet sind, dass eine theoretische Mindestsphäre, die Basissphäre genannt wird, die die Basisenden (45a, 45b, 45c) enthält, einen Radius (r1) aufweist, der sich von dem Radius (r2) einer theoretischen Mindestsphäre, die Mobile-Sphäre genannt wird, unterscheidet, die die Mobile-Enden (46a, 46b, 46c) enthält.

2. Mechanismus nach Anspruch 1, **dadurch gekennzeichnet, dass** der Radius (r1) der Basissphäre kleiner als der Radius (r2) der Mobile-Sphäre ist.

3. Mechanismus nach einem der Ansprüche 1 oder 2, **dadurch gekennzeichnet, dass** jedes Basisende (45a, 45b, 45c) durch eine Schwenkverbindung mit dem Sockel (11) verbunden ist, und dadurch, dass die Armachse (18a, 18b, 18c) senkrecht zu der Basisachse (15a, 15b, 15c) ist.

4. Mechanismus nach einem der Ansprüche 1 bis 3, **dadurch gekennzeichnet, dass** jedes Mobile-Ende (46a, 46b, 46c) durch eine Schwenkverbindung mit dem Mobile verbunden ist, und dadurch, dass die Mobile-Achse (23a, 23b, 23c) senkrecht zu der Vorderarm-Achse (22a, 22b, 22c) ist.

5. Mechanismus nach einem der Ansprüche 1 bis 4, **dadurch gekennzeichnet, dass** die Biegeachse senkrecht zu der Armachse (18a, 18b, 18c) und zu der Vorderarm-Achse (22a, 22b, 22c) ist.

6. Mechanismus nach einem der Ansprüche 1 bis 5, **dadurch gekennzeichnet, dass** die Biegegelenksvorrichtung Folgendes umfasst:
- einen Biegearm (17a, 17b, 17c) genannten Arm, der den Basisarm (14a, 14b, 14c) ergänzt, und durch eine Schwenkverbindung entlang der Armachse verbunden ist,
- einen Biegevorderarm (19a, 19b, 19c) genannten Arm, der den Biegearm verlängert, und durch mindestens eine Schwenkverbindung entlang der Biegeachse mit dem Biegearm verbunden, wobei der Mobile-Vorderarm (21a, 21b, 21c) den Biegevorderarm ergänzt,
- eine Schwenkverbindung, die den Biegevorderarm entlang der Vorderarm-Achse (22a, 22b, 22c) mit dem Mobile-Vorderarm (21a, 21b, 21c) verbindet.

7. Mechanismus nach einem der Ansprüche 1 bis 6, **dadurch gekennzeichnet, dass** die Biegegelenksvorrichtung (29a, 29b, 29c) eine Kugelgelenksverbindung umfasst.

8. Mechanismus nach einem der Ansprüche 1 bis 7, **dadurch gekennzeichnet, dass** jede Basisachse (15a, 15b, 15c) nicht parallel zu einer Längsrichtung des Basisarms (14a, 14b, 14c) ist, der durch das Basisende und durch die Biegegelenksvorrichtung verläuft.

9. Mechanismus nach Anspruch 8, **dadurch gekennzeichnet, dass** jede Basisachse (15a, 15b, 15c) senkrecht zu der Längsrichtung des Basisarms (14a, 14b, 14c) ist.

10. Mechanismus nach einem der Ansprüche 1 bis 9, **dadurch gekennzeichnet, dass** die Basisachsen (15a, 15b, 15c) komplanar sind.

11. Mechanismus nach einem der Ansprüche 1 bis 10, **dadurch gekennzeichnet, dass** jede Mobile-Achse (23a, 23b, 23c) nicht parallel zu einer Längsrichtung des Mobile-Vorderarms (21a, 21b, 21c) ist, der durch das Mobile-Ende und durch die Biegegelenksvorrichtung verläuft.

12. Mechanismus nach Anspruch 11, **dadurch gekennzeichnet, dass** jede Mobile-Achse (23a, 23b, 23c) senkrecht zu der Längsrichtung des Mobile-Vorderarms (21a, 21b, 21c) ist.

13. Mechanismus nach einem der Ansprüche 1 bis 12, **dadurch gekennzeichnet, dass** die Mobile-Achsen (23a, 23b, 23c) komplanar sind.

14. Mechanismus nach einem der Ansprüche 1 bis 13, **dadurch gekennzeichnet, dass** er nur drei kinematische Ketten (13a, 13b, 13c) gleicher Kinematik und Abmessungen umfasst.

15. Fahrzeug, insbesondere Raumfahrtsystem, **dadurch gekennzeichnet, dass** es mindestens einen Mechanismus nach einem der Ansprüche 1 bis 14 umfasst.

## Claims

1. A mechanism comprising:
- a stand (11),
- a mobile (12),
- at least three kinematic chains (13a, 13b, 13c) interposed between the stand and the mobile, including three kinematic chains (13a, 13b, 13c) each comprising:
∘ an arm, called base arm (14a, 14b, 14c), having an end, called base end (45a, 45b, 45c), connected to the stand (11) by at least one pivot connection according to a pivot axis, called base axis (15a, 15b, 15c), the different base axes of the different kinematic chains being non-concurrent at the same point,
∘ a rotary actuator, called base actuator (16a, 16b, 16c), controlling an angular position, called base angle (θa, θb, θc), of the base arm about the base axis with respect to the stand (11),
∘ an arm, called mobile forearm (21a, 21b, 21c), having an end, called mobile end (46a, 46b, 46c), connected to the mobile by at least one pivot connection according to a pivot axis, called mobile axis (23a, 23b, 23c), the different mobile axes of the different kinematic chains (13a, 13b, 13c) being non-concurrent at the same point,
∘ a joint device, called elbow joint device, connecting the base arm (14a, 14b, 14c) and the mobile forearm (21a, 21b, 21c) and comprising at least:
• one rotation according to an axis, called arm axis (18a, 18b, 18c), non-parallel to the base axis (15a, 15b, 15c),
• one rotation according to an axis, called elbow axis (20a, 20b, 20c), non-parallel to the arm axis,
• one rotation according to an axis, called forearm axis (22a, 22b, 22c), non-parallel to the elbow axis,
• the base axis (15a, 15b, 15c), the arm axis (18a, 18b, 18c) and the elbow axis (20a, 20b, 20c) being non-parallel to one another,
- the different kinematic chains and the different base actuators (16a, 16b, 16c) enabling a position control and a displacement of the mobile (12) relative to the stand (11) according to at least two degrees of freedom,
**characterized in that** the base ends (45a, 45b, 45c) and the mobile ends (46a, 46b, 46c) are arranged such that a minimum theoretical sphere containing the base ends (45a, 45b, 45c), called base sphere, has a radius (r1) different from a radius (r2) of a minimum theoretical sphere containing the mobile ends (46a, 46b, 46c), called mobile sphere.

2. The mechanism according to claim 1, **characterized in that** the radius (r1) of the base sphere is smaller than the radius (r2) of the mobile sphere.

3. The mechanism according to any of claims 1 or 2, **characterized in that** each base end (45a, 45b, 45c) is connected to the stand (11) by a pivot connection and **in that** the arm axis (18a, 18b, 18c) is orthogonal to the base axis (15a, 15b, 15c).

4. The mechanism according to any of claims 1 to 3, **characterized in that** each mobile end (46a, 46b, 46c) is connected to the mobile by a pivot connection and **in that** the mobile axis (23a, 23b, 23c) is orthogonal to the forearm axis (22a, 22b, 22c).

5. The mechanism according to any of claims 1 to 4, **characterized in that** the elbow axis is orthogonal to the arm axis (18a, 18b, 18c) and to the forearm axis (22a, 22b, 22c).

6. The mechanism according to any of claims 1 to 5, **characterized in that** the elbow joint device comprises:
- an arm, called elbow arm (17a, 17b, 17c), extending the base arm (14a, 14b, 14c) and connected to the base arm by a pivot connection according to the arm axis,
- an arm, called elbow forearm (19a, 19b, 19c), extending the elbow arm and connected to the elbow arm by at least one pivot connection according to the elbow axis, the mobile forearm (21c, 21b, 21c) extending the elbow forearm,
- a pivot connection connecting the elbow forearm to the mobile forearm (21a, 21b, 21c) according to the forearm axis (22a, 22b, 22c).

7. The mechanism according to any of claims 1 to 6, **characterized in that** the elbow joint device (29a, 29b, 29c) comprises a ball-joint connection.

8. The mechanism according to any of claims 1 to 7, **characterized in that** each base axis (15a, 15b, 15c) is non-parallel to a longitudinal direction of the base arm (14a, 14b, 14c) passing through the base end and through the elbow joint device.

9. The mechanism according to claim 8, **characterized in that** each base axis (15a, 15b, 15c) is perpendicular to said longitudinal direction of the base arm (14a, 14b, 14c).

10. The mechanism according to any of claims 1 to 9, **characterized in that** the base axes (15a, 15b, 15c) are coplanar.

11. The mechanism according to any of claims 1 to 10, **characterized in that** each mobile axis (23a, 23b, 23c) is non-parallel to a longitudinal direction of the mobile forearm (21a, 21b, 21c) passing through the mobile end and through the elbow joint device.

12. The mechanism according to claim 11, **characterized in that** each mobile axis (23a, 23b, 23c) is perpendicular to said longitudinal direction of the mobile forearm (21a, 21b, 21c).

13. The mechanism according to any of claims 1 to 12, **characterized in that** the mobile axes (23a, 23b, 23c) are coplanar.

14. The mechanism according to any of claims 1 to 13, **characterized in that** it comprises only three kinematic chains (13a, 13b, 13c) with the same kinematics and dimensions.

15. A vehicle , in particular a space system , **characterized in that** it comprises at least one mechanism according to any of claims 1 to 14.
